# FASCICULE DE BREVET EUROPEEN

(11) **EP 2 154 410 B1**
(45) Date de publication et mention de la délivrance du brevet: **05.03.2014**
(21) Numéro de dépôt: 09305727.1
(22) Date de dépôt: 31.07.2009
(51) Int. Cl.: F16L 41/12

(54) **Ensemble de serrage et liaison tubulaire**
Klemmeinheit und Schlauchverbindung
Clamping assembly and tubular connection

(30) Priorité: 01.08.2008 FR 0855359
(43) Date de publication de la demande: 17.02.2010
(73) Titulaire: Saint-Gobain PAM, 54000 Nancy (FR)
(72) Inventeur: Bidu, Philippe, 54200, DOMMARTIN Lès Toul (FR)
(74) Mandataire: Jacobson, Claude

(56) Documents cités:
- WO-A-90/12240
- DE-A1- 2 431 741
- FR-A- 513 084
- FR-A- 2 565 663
- FR-A- 2 809 471

## Description

La présente invention concerne un ensemble de serrage selon le préambule de la revendication 1.

Un tel ensemble est connu de la demande de brevet FR 2 809 471 qui décrit un collier de prise sur une conduite d'eau en charge. Le collier comporte une selle de serrage munie d'un robinet de piquage. Le collier de prise est muni d'une bande de serrage s'étendant autour de la conduite principale. La bande de serrage est munie de bossages adaptés pour coopérer avec un cliquet disposé sur la selle de serrage. Le collier de serrage comporte également des moyens de serrage de la bande autour de la conduite principale. Ces moyens de serrage comprennent une vis de serrage coopérant avec une rondelle semi cylindrique.

L'adaptation de ce collier de serrage à différents diamètres est effectuée par l'intermédiaire du cliquet et des bossages ménagés dans la bande de serrage. Le serrage de la bande de serrage est effectué par l'intermédiaire de la vis de serrage et de la rondelle. En conséquence, ce dispositif comporte des moyens d'adaptation indépendants des moyens de serrage, ce qui rend sa fabrication et son montage sur chantier difficiles.

En outre, la bande de serrage comporte des bossages et des ouvertures afin de coopérer avec le cliquet et la vis. En raison de ces déformations, la bande de serrage est difficile à fabriquer et même dans le cas où elle est fabriquée en acier inoxydable, elle est assujettie à la corrosion aux emplacements de déformation et de découpe.

Le document FR 513084 montre un collier de serrage comportant une bande, des moyens de tension ainsi que des moyens de blocage, mais qui ne permet toutefois pas d'inclure une selle munie d'un élément de robinetterie.

L'invention a pour but de proposer un collier de serrage qui ait un coût de fabrication bas, une durée de vie augmentée et qui sur chantier puisse être installé aisément autour d'une conduite.

A cet effet, l'invention a pour objet un ensemble selon la revendication 1.

Selon des modes particuliers de réalisation, l'ensemble de serrage selon l'invention comporte l'une ou plusieurs des caractéristiques suivantes :
- la bande de serrage s'étend de manière continue et lisse sur toute la largeur de la bande et ceci sur toute sa longueur.
- au moins la portion de serrage est constituée par des génératrices parallèles les unes aux autres et parallèles à l'axe central, et de préférence la bande de serrage est constituée de génératrices parallèles sur toute sa longueur.
- la bande de serrage comprend une extrémité de fixation opposée à la portion de serrage, et en ce que le collier comporte des moyens de fixation de l'extrémité de fixation à la selle de serrage.
- les moyens de fixation comprennent une gorge de fixation qui est ménagée dans la selle de serrage, qui s'étend parallèlement à l'axe central, et qui forme une contre-dépouille, l'extrémité de fixation ayant une forme complémentaire de celle de la gorge de fixation.
- l'extrémité de fixation est formée par une partie recourbée de la bande de serrage.
- les moyens de fixation comprennent une tige de sécurité insérée dans la gorge de fixation et adaptée pour s'opposer à un détachement de l'extrémité de fixation de la selle.
- les moyens de fixation sont adaptés pour fixer l'extrémité de fixation à la selle en au moins deux configurations.
- les moyens de blocage comprennent un élément de blocage et des moyens de serrage adaptés pour serrer l'élément de blocage et la portion de serrage contre la selle de serrage.
- l'élément de blocage et/ou la selle de serrage comportent un profilage adapté pour déformer plastiquement la portion de serrage lors du serrage de l'élément de blocage contre la selle de serrage.
- le collier comporte un joint d'étanchéité disposé sur la selle de serrage, et en ce que le joint d'étanchéité est adapté pour être précontraint contre la surface extérieure de l'élément tubulaire lors du serrage de la bande de serrage autour de l'élément tubulaire.
- la bande de serrage est en acier, notamment en acier inoxydable.
- le collier de serrage comprend un support pour les moyens de tension.
- les moyens de tension comportent un élément de tension adapté pour coopérer avec la portion de serrage, et l'élément de tension est mobile en rotation autour d'un axe de rotation qui est parallèle à l'axe central.
- l'élément de tension est adapté pour serrer la portion de serrage par un enroulement de la portion de serrage autour de cet élément.
- l'élément de tension comprend deux doigts parallèles formant un espace entre eux, en ce que l'espace est adapté pour recevoir la portion de serrage, et en ce que les deux doigts sont mobiles en rotation autour de l'axe de rotation.
- les moyens de tension comprennent un cliquet anti-retour adapté pour s'opposer à un desserrage de la portion de serrage.
- il comprend des moyens d'entraînement des moyens de tension, et les moyens d'entraînement sont détachables des moyens de tension.
- il comprend des moyens d'entraînement des moyens de tension, et les moyens d'entraînement sont détachables des moyens de tension.

Enfin, l'invention concerne également une liaison tubulaire comprenant un élément tubulaire principal et un ensemble de serrage tel que défini ci-dessus.

L'invention sera mieux comprise à la lecture de la description qui va suivre, donnée uniquement à titre d'exemple et faite en se référant aux dessins annexés, sur lesquels :
- la figure 1 est une vue en perspective d'une liaison tubulaire selon l'invention en vue éclatée ;
- la figure 2 est une vue en coupe de la liaison tubulaire de la figure 1 selon un plan s'étendant perpendiculairement à l'axe central de la liaison tubulaire ;
- la figure 3 est une vue en coupe selon la ligne III-III de la figure 2 ;
- les figures 4 et 5 sont des vues analogues à celles des figures 1 et 2, les moyens d'entraînement des moyens de serrage étant disposés sur la selle de raccordement ;
- la figure 6 est une vue en perspective de la liaison tubulaire lors du serrage de l'élément de blocage ;
- les figures 7 et 8 sont des vues respectivement en perspective et en coupe de la liaison tubulaire à l'état assemblé.

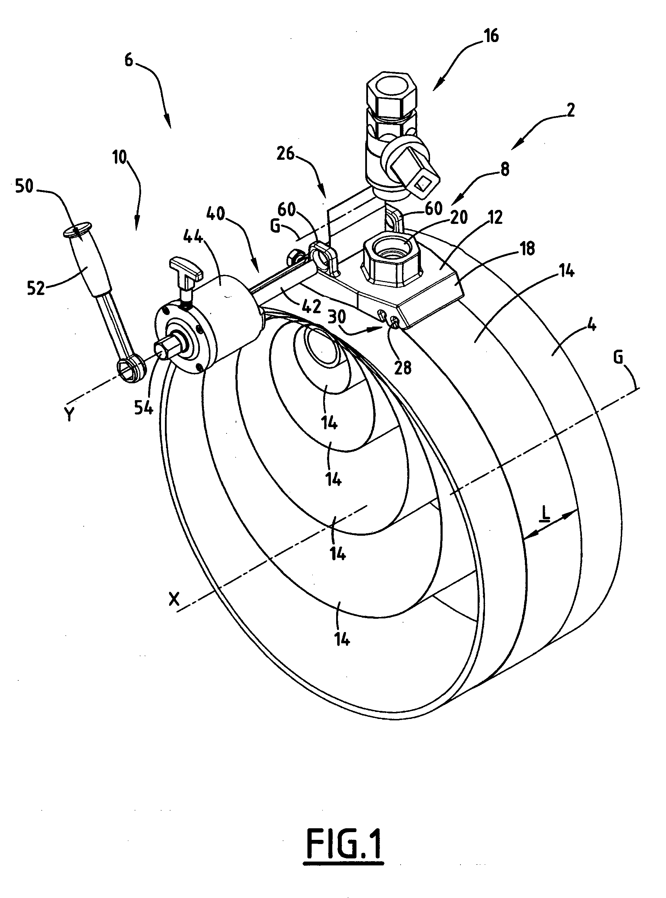

Sur la figure 1 est représentée une liaison tubulaire selon l'invention, désignée par la référence générale 2.

La liaison tubulaire 2 comprend un élément tubulaire principal 4. L'élément tubulaire principal 4 est par exemple une conduite d'eau sous pression.

L'élément tubulaire principal 4 a un diamètre extérieur situé dans une large gamme comprise entre un diamètre maximal Dmax et un diamètre minimal Dmin.

Sur la figure 1 sont représentés les éléments tubulaires principaux 4 ayant le diamètre Dmax et Dmin.

La liaison tubulaire 2 comporte en outre un ensemble de serrage 6 comprenant un collier de serrage 8 et des moyens de tension 10.

Le collier de serrage 8 définit un axe central X-X parallèle à un axe central de l'élément tubulaire principal 4 et comporte une selle de serrage 12 adaptée pour être appliquée sur l'élément tubulaire principal 4 ainsi qu'une bande de serrage 14 adaptée pour s'étendre autour de l'élément tubulaire principal 4.

Le collier de serrage 8 est en outre muni d'un élément de robinetterie auxiliaire 16 tel qu'un robinet de piquage ou un accessoire de branchement, fixé sur la selle de serrage 12.

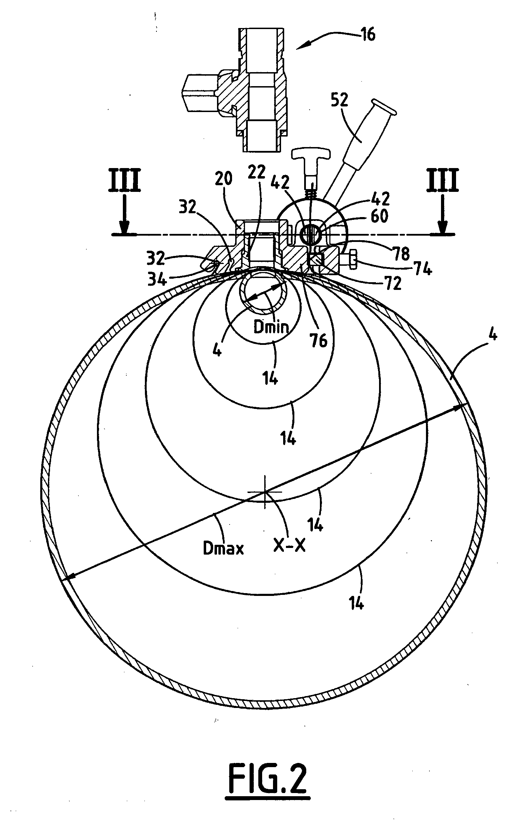

La selle de serrage 12 est constituée d'une embase 18 et d'un embout 20. L'embase 18 comporte également une ouverture intérieure dans laquelle est disposé un joint d'étanchéité 22 (Voir figure 2). L'embout 20 est muni d'un filetage intérieur dans lequel est vissé l'élément de robinetterie 16.

La bande de serrage 14 a une largeur L mesurée selon l'axe central X-X et comporte une portion de serrage 26 formant une extrémité de serrage de la bande. La bande de serrage 14 comporte une extrémité de fixation 28 opposée à la portion de serrage 26. La bande de serrage 14 a une longueur s'étendant de l'extrémité de fixation 28 jusqu'à l'extrémité de serrage 27. Au moins la portion de serrage 26 s'étend de manière continue, ininterrompue et lisse sur toute la largeur de la bande L et est délimitée exclusivement par des lignes génératrices G parallèles les unes aux autres.

En particulier, la bande de serrage 14 est constituée sur toute sa longueur entre ses deux extrémités de fixation 28 et de serrage 27 par des génératrices G parallèles les unes aux autres et parallèles à l'axe central X-X.

Aussi, la bande de serrage 14 s'étend de manière continue, ininterrompue et lisse sur toute sa largeur L et sur toute sa longueur. En conséquence, la bande de serrage 14 est de fabrication extrêmement simple et n'est constituée que d'une bande coupée à la longueur souhaitée.

En outre, étant donné que la bande de serrage n'a ni partie découpée, ni partie plastiquement déformée, elle est moins exposée à de la corrosion.

Sur la figure 1 sont montrées des bandes de serrage 14 ayant cinq longueurs différentes. Une bande de serrage 14 correspond au diamètre Dmax, et les quatre autres bandes de serrage 14 correspondent à des diamètres situés entre les diamètres Dmax et Dmin.

Le collier de serrage 8 dispose de moyens de fixation 30 de l'extrémité de fixation 28 à la selle de serrage 12. Ces moyens de fixation 30 comprennent une première gorge de fixation 32 ménagée dans l'embase 18, cette gorge 32 s'étendant parallèlement à l'axe central X-X et formant une contre-dépouille. La gorge de fixation 32 est ouverte vers l'élément tubulaire 4. Les moyens de fixation 30 comprennent également une tige de sécurité 34 insérée dans la gorge de fixation 32 et adaptée pour s'opposer à un détachement de l'extrémité de fixation 28 de la selle de serrage 12. A cet effet, l'extrémité de fixation 28 a une forme complémentaire de celle de la gorge de fixation 32 et est formée par une partie recourbée de la bande de serrage 14.

L'embase 18 comporte une deuxième gorge de fixation 32 décalée circonférentiellement de la première gorge de fixation et permettant de fixer l'extrémité de fixation 28 dans une deuxième position à la selle de serrage 12.

Les moyens de tension 10 sont détachables du collier de serrage 8 et comportent un élément de tension 40 adapté pour coopérer avec la portion de serrage 26. Cet élément de tension 40 est constitué de deux doigts 42 parallèles et formant un espace entre eux. Cet espace est adapté pour recevoir la portion de serrage 26. Les deux doigts 42 sont mobiles en rotation autour d'un axe de rotation Y-Y qui est parallèle à l'axe central X-X, ce qui permet de tendre et de serrer la portion de serrage 26 par enroulement de cette portion 26 autour des doigts 42.

Les moyens de tension 10 sont également munis d'un boîtier 44 qui est adapté pour être relié solidaire en rotation à l'embase 18. Les moyens de tension 10 sont munis d'un cliquet anti-retour 46 relié à l'élément de tension 40 et disposé dans le boîtier 44. Ce cliquet anti-retour 46 est adapté pour s'opposer à un desserrage de la portion de serrage 26.

L'ensemble de serrage 6 comprend en outre des moyens d'entraînement 50 des moyens de tension 10. Ces moyens d'entraînement 50 comprennent une clé 52 adaptée pour coopérer avec un embout correspondant 54 qui forme tête d'indexation pour la clé 52 et qui est relié en rotation à l'élément de tension 40.

La clé 52 est détachable des moyens de tension 10.

Le collier de serrage 8 est muni d'un support pour les moyens de tension 10. Ce support est constitué dans le cas présent de deux protubérances 60 solidaires de l'embase 18 et disposées de part et d'autre de la portion de serrage 26. Ces protubérances 60 comportent des évidements circulaires adaptés pour recevoir mobile en rotation l'élément de tension 40.

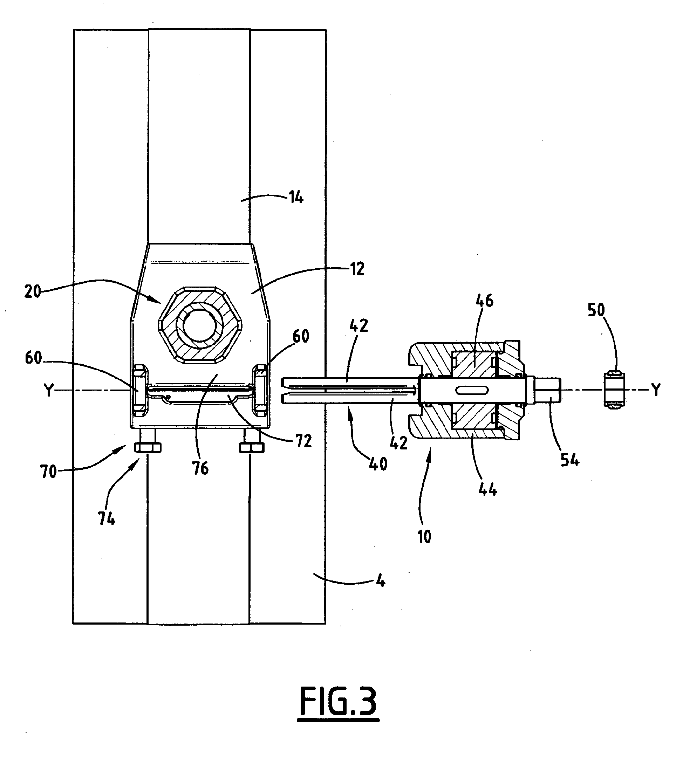

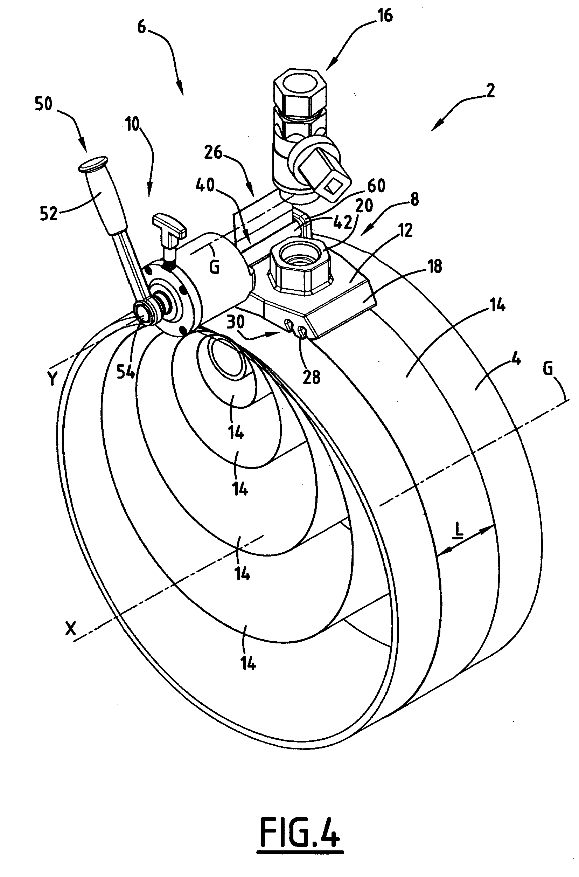

En se référant notamment aux figures 3 et 4, le collier de serrage 8 dispose en outre de moyens de blocage 70 adaptés pour bloquer la portion de serrage 26 par rapport à la selle de serrage 12 lorsque la bande de serrage 14 est à l'état serré. Ces moyens de blocage 70 permettent de maintenir la bande de serrage 14 à l'état serré, lorsque les moyens de tension 10 sont détachés de la selle de serrage 12 après le serrage de la bande 14 autour de l'élément tubulaire principal 4. Les moyens de blocage 70 comprennent un élément de blocage 72 et des moyens de serrage 74 adaptés pour serrer l'élément de blocage 72 et la portion de serrage 26 contre la selle 12. En l'occurrence, les moyens de serrage 74 sont constitués par deux vis s'engageant dans des taraudages ménagés dans la selle de serrage 12. A cet effet, la selle de serrage 12 comporte une portion de contre-pression 76 munie d'un profilage sous forme d'une rainure 78 ayant une forme complémentaire à celle de l'élément de blocage 72. De ce fait, lors du serrage des moyens de serrage 74, la portion de serrage 26 est plastiquement déformée en épousant localement la forme de la rainure 78. Ainsi, les moyens de blocage 70 sont adaptés pour maintenir la portion de serrage 26 à l'état serré par complémentarité de formes.

L'établissement de la liaison tubulaire selon l'invention est effectué de la manière suivante.

On part de la configuration montrée sur les figures 1 à 3. La selle de serrage 12 est appliquée sur la surface extérieure de l'élément tubulaire 4. La bande de serrage 14 est fixée par son extrémité de fixation 28 à l'embase 18. La portion de serrage 26 est enfilée entre la portion de contre-pression 76 et l'élément de blocage 72, et les vis 74 sont dévissées. Ainsi, la portion de serrage 26 est librement mobile par rapport à l'élément de blocage 72. Dans cette configuration, les moyens de tension 10 sont détachés de la selle de serrage 12, et l'élément de robinetterie auxiliaire 16 est dévissé de l'embout 20.

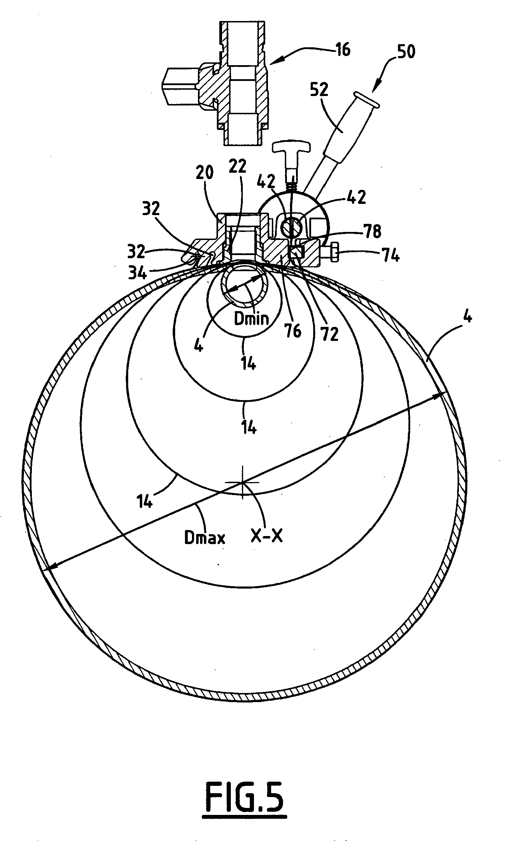

Dans un premier temps, les moyens de tension 10 sont alors attachés à la selle de serrage 12, en enfilant les deux doigts 42 dans les ouvertures des protubérances 60. Simultanément, le boîtier 44 est attaché à l'embase 18. L'ensemble prend alors la configuration montrée sur les figures 4 et 5.

Ensuite, les doigts 42 sont entraînés en rotation par la clé 52 et la portion de serrage 26 est enroulée autour des doigts 42. En conséquence, la bande de serrage 14 est tendue sur la circonférence de l'élément tubulaire 4. Grâce au cliquet anti-retour 46, les moyens de tension 10 ne peuvent pas se desserrer sous l'action de la bande de serrage tendue 14. Pendant cette phase de tension et de serrage de la bande 14, le joint d'étanchéité 22 est uniquement précontraint contre la surface extérieure de l'élément tubulaire 4.

Ensuite, la clé 52 est enlevée de l'embout 54 d'entraînement des doigts 42.

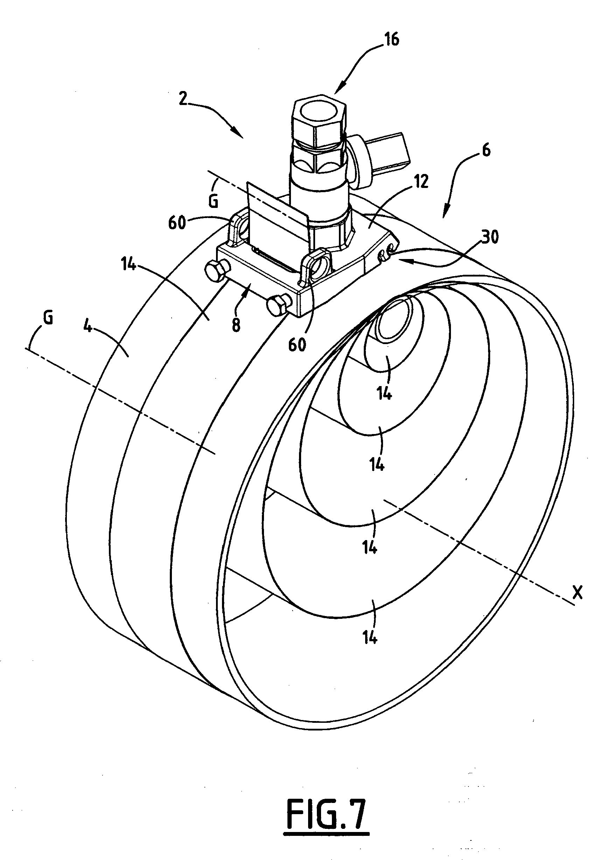

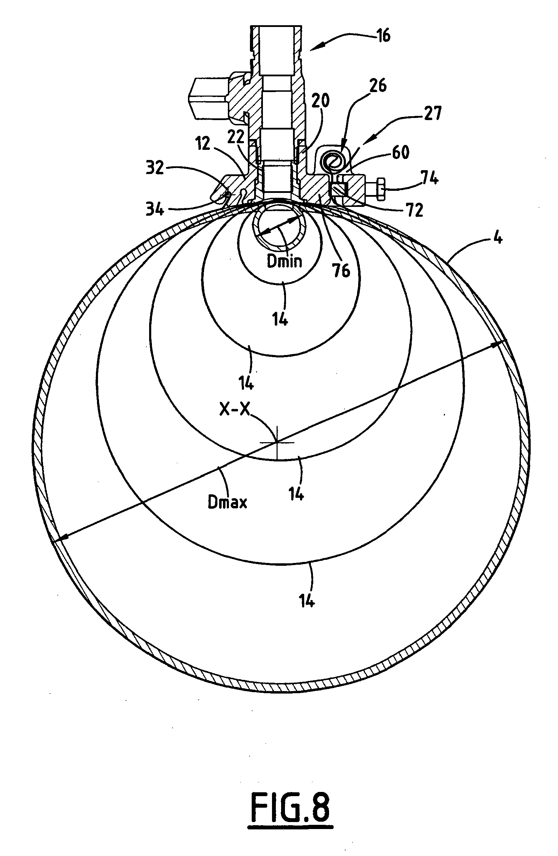

Pendant que la bande de serrage 14 est maintenue à l'état serré par les moyens de tension 10 sous l'action du cliquet anti-retour 46, l'élément de blocage 72 est serré contre la portion de contre-pression 76 en serrant les vis 74, déformant ainsi plastiquement la portion de serrage 26. Lorsque la portion de serrage 26 est bloquée par l'élément de blocage 72, le cliquet anti-retour 46 est alors libéré et les moyens de tension 10 sont détachés de la selle 12. Ainsi, la bande de serrage 14 est maintenue à l'état serré exclusivement par l'action des moyens de blocage 70. Enfin, l'élément de robinetterie auxiliaire 16 est vissé dans l'embout 20 de la selle, provoquant alors la compression finale du joint 22 nécessaire à l'obtention d'une étanchéité optimale, et l'ensemble prend la configuration montrée sur les figures 7 et 8.

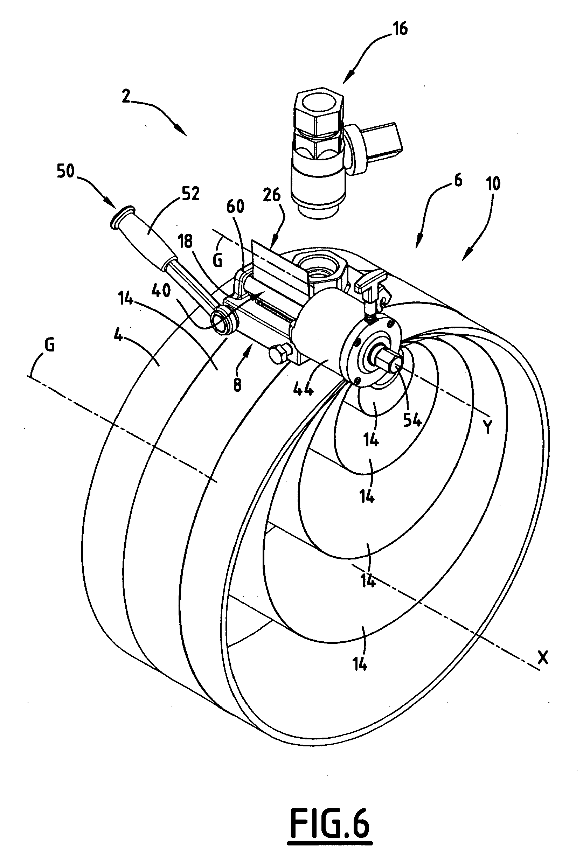

Il est à noter que la portion de fixation 26 n'est pas montrée à l'état enroulé sur les figures 6 et 7 pour des raisons de lisibilité. Grâce au fait que les moyens de tension 10 sont détachables du collier de serrage 8, le collier de serrage a des dimensions faibles pour une capacité de serrage donnée et est à encombrement réduit. De plus, les moyens de tension 10 sont uniquement à fabriquer une seule fois pour une utilisation avec une multitude de colliers de serrage.

En variante non représentée, le collier de serrage peut être entouré d'un gel anti-corrosion après le serrage.

## Revendications

1. Ensemble de serrage, du type comprenant un collier de serrage (8), du type définissant un axe central (X-X) et comprenant,
- une selle de serrage (12) adaptée pour être appliquée sur un élément tubulaire (4),
- le collier de serrage comprenant un élément de robinetterie (16) fixé sur la selle de serrage, en particulier un robinet de piquage ou un accessoire de branchement,
- une bande de serrage (14) ayant une largeur (L) mesurée selon l'axe central (X-X) et adaptée pour s'étendre autour de l'élément tubulaire (4),
- la bande de serrage comprenant une portion de serrage (26) adaptée pour coopérer avec des moyens de tension (10) adaptés pour serrer la bande de serrage sur l'élément tubulaire, la portion de serrage (26) s'étendant de manière continue et lisse sur toute la largeur (L) de la bande de serrage,
l'ensemble de serrage comprenant lesdits moyens de tension (10) de la bande de serrage (14),
**caractérisé en ce que**
les moyens de tension (10) sont détachables du collier de serrage, et **en ce que**
le collier de serrage comprend des moyens de blocage (70) adaptés pour bloquer la portion de serrage (26) par rapport à la selle de serrage, lorsque la bande de serrage (14) est à l'état serré, ces moyens de blocage (70) permettant de maintenir la bande de serrage (14) à l'état serré, lorsque les moyens de tension (10) sont détachés de la selle de serrage (12) après le serrage de la bande (14) autour de l'élément tubulaire (4).

2. Ensemble de serrage selon la revendication 1, **caractérisé en ce que** la bande de serrage (14) s'étend de manière continue et lisse sur toute la largeur de la bande (L) et ceci sur toute sa longueur.

3. Ensemble de serrage selon la revendication 1 ou 2, **caractérisé en ce qu'**au moins la portion de serrage (26) est constituée par des génératrices parallèles les unes aux autres et parallèles à l'axe central, et de préférence la bande de serrage (14) est constituée de génératrices parallèles sur toute sa longueur.

4. Ensemble de serrage selon l'une quelconque des revendications précédentes, **caractérisé en ce que** la bande de serrage (14) comprend une extrémité de fixation (28) opposée à la portion de serrage (26), et **en ce que** le collier de serrage (8) comporte des moyens de fixation (30) de l'extrémité de fixation (28) à la selle de serrage.

5. Ensemble de serrage selon la revendication 4, **caractérisé en ce que** les moyens de fixation (30) comprennent une gorge de fixation (32) qui est ménagée dans la selle de serrage, qui s'étend parallèlement à l'axe central (X-X), et qui forme une contre-dépouille, l'extrémité de fixation (28) ayant une forme complémentaire de celle de la gorge de fixation.

6. Ensemble de serrage selon la revendication 5, **caractérisé en ce que** l'extrémité de fixation (28) est formée par une partie recourbée de la bande de serrage.

7. Ensemble de serrage selon la revendication 5 ou 6, **caractérisé en ce que** les moyens de fixation (30) comprennent une tige de sécurité (34) insérée dans la gorge de fixation (32) et adaptée pour s'opposer à un détachement de l'extrémité de fixation (28) de la selle.

8. Ensemble de serrage selon l'une quelconque des revendications 4 à 7 **caractérisé en ce que** les moyens de fixation (30) sont adaptés pour fixer l'extrémité de fixation (28) à la selle en au moins deux configurations.

9. Ensemble de serrage selon l'une quelconque des revendications précédentes, **caractérisé en ce que** les moyens de blocage (70) comprennent un élément de blocage (72) et des moyens de serrage (74) adaptés pour serrer l'élément de blocage (72) et la portion de serrage (26) contre la selle de serrage.

10. Ensemble de serrage selon la revendication 9, **caractérisé en ce que** l'élément de blocage (72) et/ou la selle de serrage (12) comportent un profilage (78) adapté pour déformer plastiquement la portion de serrage (26) lors du serrage de l'élément de blocage contre la selle de serrage.

11. Ensemble de serrage selon l'une quelconque des revendications précédentes, **caractérisé en ce que** le collier de serrage comporte un joint d'étanchéité (22) disposé sur la selle de serrage, et **en ce que** le joint d'étanchéité (22) est adapté pour être précontraint contre la surface extérieure de l'élément tubulaire (4) lors du serrage de la bande de serrage (14) autour de l'élément tubulaire.

12. Ensemble de serrage selon l'une quelconque des revendications précédentes, **caractérisé en ce que** la bande de serrage (14) est en acier, notamment en acier inoxydable.

13. Ensemble de serrage selon l'une quelconque des revendications précédentes, **caractérisé en ce que** le collier de serrage comprend un support (60) pour les moyens de tension (10).

14. Ensemble de serrage selon l'une quelconque des revendications précédentes, **caractérisé en ce que** les moyens de tension (10) comportent un élément de tension (40) adapté pour coopérer avec la portion de serrage (26), et **en ce que** l'élément de tension (40) est mobile en rotation autour d'un axe de rotation (Y-Y) qui est parallèle à l'axe central (X-X).

15. Ensemble de serrage selon la revendication 14, **caractérisé en ce que** l'élément de tension (40) est adapté pour serrer la portion de serrage (26) par un enroulement de la portion de serrage autour de cet élément.

16. Ensemble de serrage selon la revendication 15, **caractérisé en ce que** l'élément de tension comprend deux doigts (42) parallèles formant un espace entre eux, **en ce que** l'espace est adapté pour recevoir la portion de serrage (26), et **en ce que** les deux doigts (42) sont mobiles en rotation autour de l'axe de rotation (Y-Y).

17. Ensemble de serrage selon l'une quelconque des revendications précédentes, **caractérisé en ce que** les moyens de tension (10) comprennent un cliquet anti-retour (46) adapté pour s'opposer à un desserrage de la portion de serrage (26).

18. Ensemble de serrage selon l'une quelconque des revendications précédentes, **caractérisé en ce qu'**il comprend des moyens d'entraînement (50) des moyens de tension (10), et **en ce que** les moyens d'entraînement sont détachables des moyens de tension (10).

19. Liaison tubulaire comprenant un élément tubulaire principal (4) et un ensemble de serrage, **caractérisé en ce que** l'ensemble de serrage est un ensemble selon au moins la revendication 1.

## Patentansprüche

1. Klemmanordnung, eine Klemmschelle (8) der Art umfassend, die eine Mittelachse (X-X) definiert und die umfasst
- einen Klemmsattel (12), der angepasst ist, um auf einem Rohrelement (4) angebracht zu werden,
- wobei die Klemmschelle ein Armaturelement (16), insbesondere einen Ablaufhahn oder ein Verzweigungszubehör umfasst, das an dem Klemmsattel befestigt ist,
- ein Klemmband (14), das eine Breite (L) aufweist, gemessen gemäß der Mittelachse (X-X), und angepasst ist, sich um das Rohrelement (4) herum zu erstrecken,
- wobei das Klemmband einen Klemmbereich (26) umfasst, der angepasst ist, mit Spannmitteln (10) zusammenzuarbeiten, die angepasst sind, das Klemmband auf dem Rohrelement festzuziehen, wobei der Klemmbereich (26) sich in kontinuierlicher und glatter Weise über die gesamte Breite (L) des Klemmbands erstreckt,
- wobei die Klemmanordnung die Spannmittel (10) des Klemmbandes (14) umfasst,
**dadurch gekennzeichnet, dass**
die Spannmittel (10) von der Klemmschelle entfernbar sind und dass die Klemmschelle Mittel (70) zum Blockieren umfasst, die angepasst sind, den Klemmbereich (26) in Bezug auf den Klemmsattel zu blockieren, wenn das Klemmband (14) im gespannten Zustand ist, wobei diese Mittel (70) zum Blockieren gestatten, das Klemmband (14) im gespannten Zustand zu halten, wenn die Spannmittel (10) nach dem Spannen des Bandes (14) um das Rohrelement (4) herum von dem Klemmsattel (12) entfernt werden.

2. Klemmanordnung nach Anspruch 1, **dadurch gekennzeichnet, dass** das Klemmband (14) sich in einer kontinuierlichen und glatten Weise über die gesamte Breite (L) des Bandes und dies über seine gesamte Länge erstreckt.

3. Klemmanordnung nach Anspruch 1 oder 2, **dadurch gekennzeichnet, dass** mindestens der Klemmbereich (26) durch zueinander parallele und parallel zu der Mittelachse liegende Mantellinien gebildet wird und vorzugsweise das Klemmband (14) von Mantellinien gebildet wird, die über seine gesamte Länge parallel sind.

4. Klemmanordnung nach einem beliebigen der vorhergehenden Ansprüchen, **dadurch gekennzeichnet, dass** das Klemmband (14) ein Befestigungsende (28) umfasst, das entgegengesetzt zum Klemmbereich (26) liegt und dass die Klemmschelle (8) Mittel (30) zur Befestigung des Befestigungsendes (28) an dem Klemmsattel aufweist.

5. Klemmanordnung nach Anspruch 4, **dadurch gekennzeichnet, dass** die Mittel (30) zur Befestigung eine Befestigungsnut (32) umfassen, die in den Klemmsattel eingearbeitet ist, die sich parallel zur Mittelachse (X-X) erstreckt und die eine Hinterschneidung bildet, wobei das Befestigungsende (28) eine komplementäre Form zu der der Befestigungsnut aufweist.

6. Klemmanordnung nach Anspruch 5, **dadurch gekennzeichnet, dass** das Befestigungsende (28) durch ein gekrümmtes Teil des Klemmbandes gebildet wird.

7. Klemmanordnung nach Anspruch 5 oder 6, **dadurch gekennzeichnet, dass** die Befestigungsmittel (30) einen Sicherungsstift (34) umfassen, der in die Befestigungsnut (32) eingeführt ist und angepasst ist, sich einem Lösen des Befestigungsendes (28) des Sattels zu widersetzen.

8. Klemmanordnung nach einem beliebigen der Ansprüche 4 bis 7, **dadurch gekennzeichnet, dass** die Mittel (30) zur Befestigung angepasst sind, das Befestigungsende (28) an dem Sattel in mindestens zwei Konfigurationen zu befestigen.

9. Klemmanordnung nach einem beliebigen der vorhergehenden Ansprüchen, **dadurch gekennzeichnet, dass** die Mittel (70) zum Blockieren ein Blockierelement (72) und Mittel zum Klemmen (74) umfassen, die angepasst sind, das Blockierelement (72) und den Klemmbereich (26) gegen den Klemmsattel zu klemmen.

10. Klemmanordnung nach Anspruch 9, **dadurch gekennzeichnet, dass** das Blockierelement (72) und/oder der Klemmsattel (12) eine Profilierung (78) aufweisen, die angepasst ist, plastisch den Klemmbereich (26) bei dem Klemmen des Blockierelements gegen den Klemmsattel zu verformen.

11. Klemmanordnung nach einem beliebigen der vorhergehenden Ansprüchen, **dadurch gekennzeichnet, dass** die Klemmschelle eine Dichtung (22) aufweist, die an dem Klemmsattel angeordnet ist, und dass die Dichtung (22) angepasst ist, gegen die Außenfläche des Rohrelements (4) bei dem Spannen des Klemmbands (14) um das Rohrelement vorgespannt zu werden.

12. Klemmanordnung nach einem beliebigen der vorhergehenden Ansprüchen, **dadurch gekennzeichnet, dass** das Klemmband (14) aus Stahl, insbesondere aus nicht rostendem Stahl hergestellt ist.

13. Klemmanordnung nach einem beliebigen der vorhergehenden Ansprüchen, **dadurch gekennzeichnet, dass** die Klemmschelle einen Träger (60) für die Spannmittel (10) umfasst.

14. Klemmanordnung nach einem beliebigen der vorhergehenden Ansprüchen, **dadurch gekennzeichnet, dass** die Spannmittel (10) ein Spannelement (40) aufweisen, das angepasst ist, mit dem Klemmbereich (26) zusammenzuarbeiten und dass das Spannelement (40) bezüglich der Drehung um eine Drehachse (Y-Y) beweglich ist, die parallel zur Mittelachse (X-X) liegt.

15. Klemmanordnung nach Anspruch 14, **dadurch gekennzeichnet, dass** das Spannelement (40) angepasst ist, den Klemmbereich (26) durch Einrollen des Klemmbereichs um dieses Element zu spannen.

16. Klemmanordnung nach Anspruch 15, **dadurch gekennzeichnet, dass** das Spannelement (40) zwei parallele Finger (42) umfasst, die einen Raum zwischen sich bilden, dass der Raum angepasst ist, den Klemmbereich (26) aufzunehmen und dass die zwei Finger (42) bezüglich der Drehung um die Drehachse (Y-Y) beweglich sind.

17. Klemmanordnung nach einem beliebigen der vorhergehenden Ansprüchen, **dadurch gekennzeichnet, dass** die Spannmittel (10) eine Rückschlagklinke (46) umfassen, die angepasst ist, sich einem Lösen des Klemmbereichs (26) zu widersetzen.

18. Klemmanordnung nach einem beliebigen der vorhergehenden Ansprüchen, **dadurch gekennzeichnet, dass** sie Mittel (50) zum Antreiben der Spannmittel (10) umfasst und dass die Antriebsmittel von den Spannmitteln (10) lösbar sind.

19. Rohrverbindung, ein Hauptrohrelement (4) und eine Klemmanordnung umfassend, **dadurch gekennzeichnet, dass** die Klemmanordnung eine Anordnung nach mindestens dem Anspruch 1 ist.

## Claims

1. Clamping unit of the type comprising a clamping collar (8) of the type defining a central axis (X-X) and comprising:
- a clamping saddle (12) which is adapted to be fitted onto a tubular element (4);
- the clamping collar comprising a plumbing element (16) which is fixed onto the clamping saddle, in particular a tapping faucet or a connecting fitting;
- a clamping band (14) having a width (L) measured along the central axis (X-X) and being adapted to extend round the tubular element (4);
- said clamping band comprising a clamping portion (26) which is adapted to cooperate with tightening means (10) which are adapted to clamp the clamping band onto the tubular element, said clamping portion (26) extending continuously and smoothly over the entire width (L) of said clamping band;
the clamping unit comprising the said means (10) for tightening the clamping band (14);
**characterised in that**
the tightening means (10) can be detached from the clamping collar,
and **in that**
the clamping collar comprises locking means (70) which are adapted to lock the clamping portion (26) in relation to the clamping saddle, when the clamping band (14) is in the clamped state, the said locking means (70) making it possible to keep the clamping band (14) in the clamped state, when the tightening means (10) are detached from the clamping saddle (12) after the clamping of the band (14) round the tubular element (4).

2. Clamping unit according to Claim 1, **characterised in that** the clamping band (14) extends continuously and smoothly over the entire width of the band (L) and does so over its entire length.

3. Clamping unit according to Claim 1 or 2, **characterised in that** at least the clamping portion (26) is constituted by generatrices which are parallel to one another and parallel to the central axis, and the clamping band (14) is preferably made up of generatrices which are parallel over its entire length.

4. Clamping unit according to any of the preceding claims, **characterised in that** the clamping band (14) comprises a fixing end (28) which is opposed to the clamping portion (26), and **in that** the clamping collar (8) comprises means (30) for fixing the fixing end (28) to the clamping saddle.

5. Clamping unit according to Claim 4, **characterised in that** the fixing means (30) comprise a fixing channel (32) which is arranged in the clamping saddle, which extends parallel to the central axis (X-X) and which forms an undercut, the fixing end (28) having a shape which is complementary with that of the fixing channel.

6. Clamping unit according to Claim 5, **characterised in that** the fixing end (28) is formed by a bent-back part of the clamping band.

7. Clamping unit according to Claim 5 or 6, **characterised in that** the fixing means (30) comprise a safety rod (34) which is inserted in the fixing channel (32) and is adapted to oppose detachment of the fixing end (28) from the saddle.

8. Clamping unit according to any of Claims 4 to 7, **characterised in that** the fixing means (30) are adapted to fix the fixing end (28) to the saddle in at least two configurations.

9. Clamping unit according to any of the preceding claims, **characterised in that** the locking means (70) comprise a locking element (72) and clamping means (74) which are adapted to clamp said locking element (72) and the clamping portion (26) against the clamping saddle.

10. Clamping unit according to Claim 9, **characterised in that** the locking element (72) and/or the clamping saddle (12) comprise profiling (78) which is adapted to deform the clamping portion (26) plastically when the locking element is clamped against the clamping saddle.

11. Clamping unit according to any of the preceding claims, **characterised in that** the clamping collar comprises a seal (22) which is disposed on the clamping saddle, and **in that** said seal (22) is adapted to be pre-stressed against the outer surface of the tubular element (4) when the clamping band (14) is clamped round said tubular element.

12. Clamping unit according to any of the preceding claims, **characterised in that** the clamping band (14) is made of steel, especially stainless steel.

13. Clamping unit according to any of the preceding claims, **characterised in that** the clamping collar comprises a support (60) for the tightening means (10) .

14. Clamping unit according to any of the preceding claims, **characterised in that** the tightening means (10) comprise a tightening element (40) which is adapted to cooperate with the clamping portion (26), and **in that** said tightening element (40) is movable in rotation about an axis of rotation (Y-Y) which is parallel to the central axis (X-X).

15. Clamping unit according to Claim 14, **characterised in that** the tightening element (40) is adapted to clamp the clamping portion (26) by winding said clamping portion round the said element.

16. Clamping unit according to Claim 15, **characterised in that** the tightening element comprises two parallel fingers (42) forming a space between them, **in that** said space is adapted to receive the clamping portion (26), and **in that** the two fingers (42) are movable in rotation about the axis of rotation (Y-Y).

17. Clamping unit according to any of the preceding claims, **characterised in that** the tightening means (10) comprise a non-return ratchet (46) which is adapted to oppose unclamping of the clamping portion (25) .

18. Clamping unit according to any of the preceding claims, **characterised in that** it comprises means (50) for driving the tightening means (10), and **in that** said driving means can be detached from said tightening means (10).

19. Tubular link comprising a main tubular element (4) and a clamping unit, **characterised in that** said clamping unit is a unit according to at least Claim 1.
